**Europäisches Patentamt**

**European Patent Office**

**Office européen des brevets** ·

(19)

(11) Numéro de publication: **0 201 474**
**A1**

(12)

# DEMANDE DE BREVET EUROPEEN

(21) Numéro de dépôt: **86870043.6**

(22) Date de dépôt: **09.04.86**

(51) Int. Cl.⁴: **B65G 65/48** , **F23K 3/00** , **B65B 37/08** , **C21B 5/00**

(30) Priorité: **19.04.85 FR 8505960**

(43) Date de publication de la demande:
**17.12.86 Bulletin 86/46**

(84) Etats contractants désignés:
**BE DE IT NL**

(71) Demandeur: **CERATEC S.A.**
**Rue du Touquet 228**
**B-7793 Comines (Ploegsteert)(BE)**

(72) Inventeur: **Deconinck, Luc, Ir.**
**Omloopstraat 2 A**
**B-8968 Ieper(BE)**

(74) Mandataire: **Dopchie, Jean-Marc**
**Kortrijks Octrooi- en Merkenbureau - K.O.B.**
**Conservatoriumplein 8**
**B-8500 Kortrijk(BE)**

(54) **Distributeur de matière granulée ou pulvérulente et installation comprenant de tels distributeurs.**

(57) Distributeur de matière granulée ou pulvérulente comprenant une trémie d'alimentation (1), un plateau de distribution (3) et un organe de distribution (2), caractérisé en ce que cet organe est animé d'un mouvement de rotation et comprend une assiette de dosage (5) au dessous de la trémie. (1) et un déflecteur (9) poussant la matière granulée ou pulvérulente sur le plateau de distribution (3) vers les orifices (10) distribués dans ce plateau.

FIG.1

EP 0 201 474 A1

"Distributeur de matière granulée ou pulvérulente et installation comprenant de tels distributeurs".

La présente invention a pour objet un distributeur de matière granulée ou pulvérulente et en particulier de combustible solide tel que le poussier de charbon.

Pour de nombreux fours, comme par exemple ceux utilisés dans les briqueteries, on fait appel à des séries de brûleurs de puissance modérée, - distribués suivant différentes zones de combustion.

Au cas d'emploi de combustible solide, de fine granulométrie, on fait généralement appel à des distributeurs, pouvant alimenter plusieurs brûleurs simultanément. Ces brûleurs sont alors regroupés en quelques lignes adjacentes afin de permettre un réglage facile des températures en agissant simplement au niveau du distributeur.

Généralement les distributeurs sont assez complexes, et du fait même de la nature de la matière de fine granulométrie, ils présentent des risques de bouchage partiel ou total, avec la conséquence d'un manque de fiabilité, et exigent un contrôle et une maintenance coûteuse.

Le but de l'invention est d'obtenir une distribution régulière et fiable, permettant un réglage facile du débit global ou individuel des brûleurs, de faible maintenance, et de faible puissance installée.

Le distributeur de combustible solide suivant l'invention, qui comprend généralement une trémie d'alimentation, un plateau de distribution, est caractérisé par un organe de distribution et de dosage situé entre le fond de la trémie d'alimentation et le plateau de distribution, animé d'un mouvement régulier de rotation et comprenant une assiette en dessous de la trémie avec sortie excentrée et un déflecteur poussant la matière granulée sur le plateau de distribution vers les orifices distribués dans ce plateau.

D'autres particularités et avantages de distributeur de combustible solide suivant l'invention ressortiront de la description qui va suivre, d'un distributeur de matière granulée pour l'alimentation de plusieurs brûleurs, faite en regard de figures annexées, et donnant à titre explicatif, mais nullement limitatif une forme préférée de réalisation.

La figure 1 est une coupe schématique d'un distributeur de combustible solide suivant l'invention.

La figure 2 est une coupe schématique horizontale du déflecteur de l'organe de distribution au droit du plateau de distribution.

La figure 3 est une coupe schématique verticale d'une réalisation particulière de l'assiette de sortie de l'organe de distribution.

La figure 4 est une coupe schématique horizontale d'une réalisation particulière du plateau de distribution.

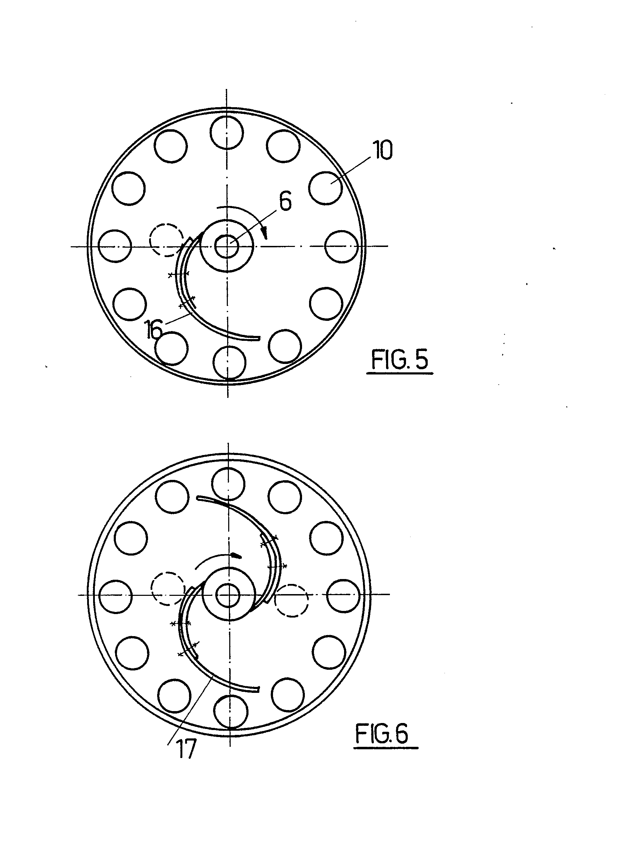

La figure 5 est une coupe schématique horizontale d'une réalisation particulière du déflecteur.

La figure 6 est une coupe schématique horizontale d'une autre réalisation particulière du déflecteur.

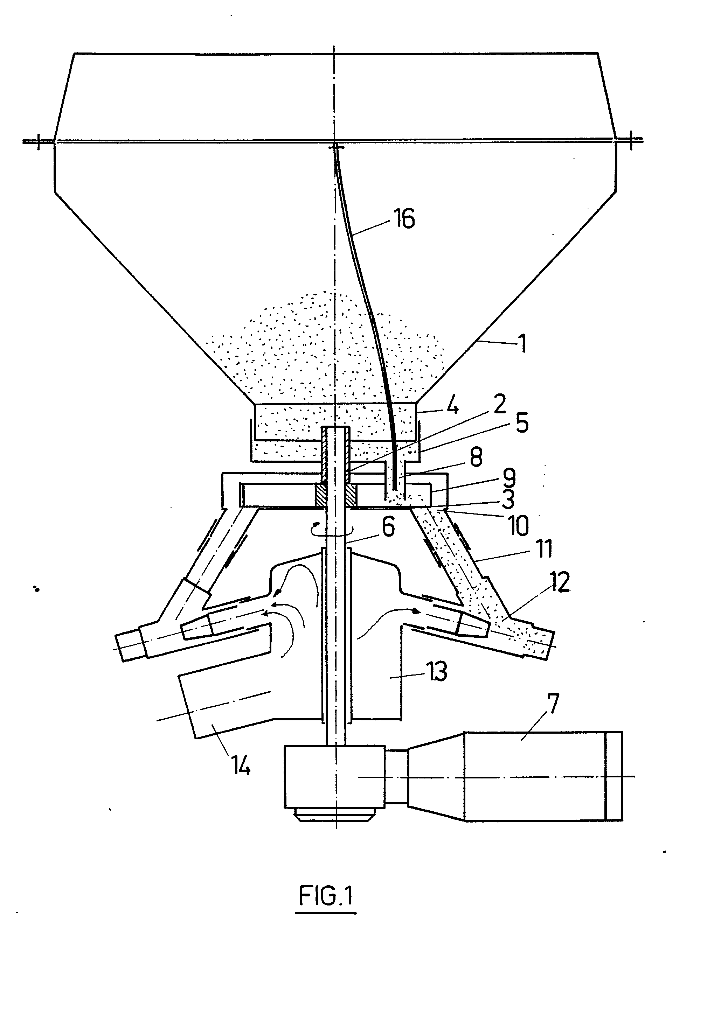

Un distributeur de combustible solide de fine granulométrie, suivant l'invention, tel qu'il est représenté schématiquement à la figure 1, comporte une trémie (1), un organe (2) de distribution et un plateau (3) de distribution.

Le combustible solide est amené par un système quelconque de transport dans la trémie - (1) de forme tronconique. L'extrémité inférieure, de diamètre réduit, se termine par une partie cylindrique (4) engagée dans l'assiette de dosage (5) à bord recourbé de l'organe de distribution (2). Cet organe de distribution (2) est fixé à un axe vertical (6), animé d'un mouvement de rotation lent au moyen d'un groupe motoréducteur variateur (7).

Dans l'assiette de dosage (5) de l'organe de distribution est prévue une buselure, cylindrique de sortie (8) excentrée par rapport à l'axe de la trémie (1) et de l'organe de distribution (2). L'assiette de dosage (5), de l'organe de distribution (2), constituant de fait le fond de la trémie, tourne autour de l'axe vertical (6) et dépose par simple gravité grâce à la buselure de sortie (8) un ruban de combustible sur le plateau (3) de distribution.

L'organe de distribution (2), fixé à l'axe vertical (6), comporte à sa partie inférieure un déflecteur - (9), constitué d'un fer plat, courbé en forme de spirale logarithmique, dont le tranchant, par le mouvement de rotation imprimé à l'axe vertical (6) racle le plateau de distribution (3) et pousse le ruban de combustible déposé sur le plateau de distribution (3) vers les orifices (10) distribués dans ce plateau (3).

A chaque orifice (10) de sortie du plateau de distribution (3) correspond une tubulure (11) par où s'écoule une partie du combustible solide vers un venturi (12), où il est aspiré par de l'air provenant du distributeur d'air (13) situé en dessous du plateau de distribution (3).

L'air, provenant d'une soufflerie extérieure, entre dans le distributeur d'air (13) par la tubulure (14), est réparti dans le distributeur (13) en autant de venturis (12) qu'il y a d'orifices (10) dans le plateau de distribution (3).

L'air soufflé par les venturis (12) entraîne les combustibles vers chaque brûleur et constitue l'air primaire de combustion.

Lorsque le combustible s'écoule difficilement dans la trémie (1), on peut faire appel suivant une technique connue d'un fil d'acier (16) fixé, à un extrémité, au centre de la partie supérieure de la trémie, et dont l'extrémité opposée nettoie de manière continue la tubulure de sortie (8) de l'assiette de dosage (5) de l'organe de distribu tion (2).

Le distributeur de matière granulée ou pulvérulente suivant l'invention a le grand avantage de permettre un réglage facile, tant du débit global, qu'individuel à chaque tubulure de sortie. Dans l'exemple décrit le volume global de combustible déposé sur le plateau de distribution (3) est fonction du diamètre de la tubulure (8) de sortie de l'assiette (5) de dosage de l'organe (2) d'alimentation, de la distance entre cette assiette (5) et le plateau (3) de distribution et de la vitesse de rotation de l'organe (2) de distribution.

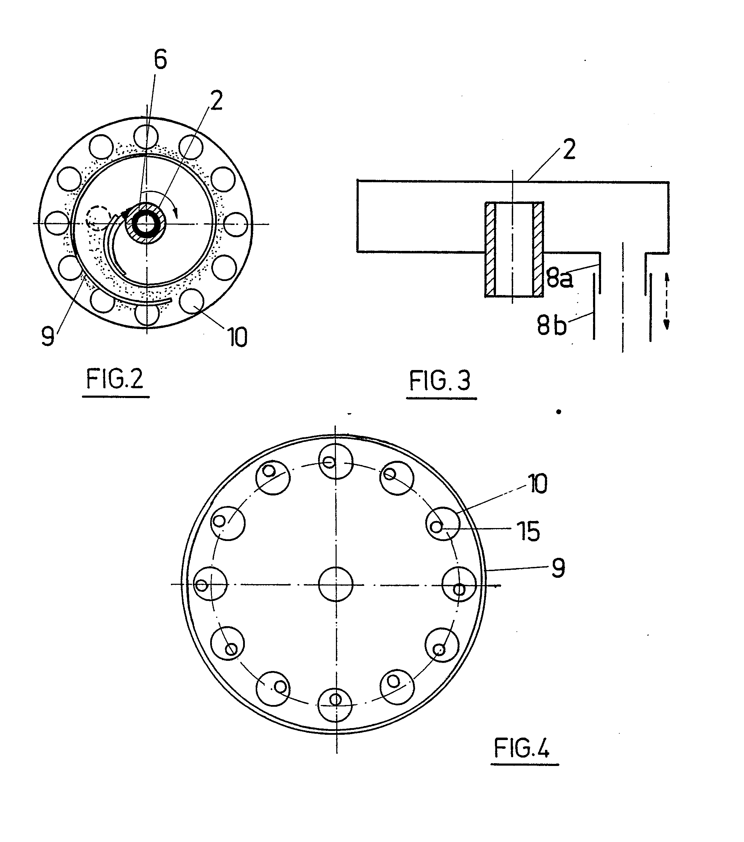

Dans une forme particulière de réalisation du distributeur de combustible suivant l'invention (fig. 3) l'organe (2) de distribution comprend une double tubulure (8a) et (8b) pouvant coulisser l'une sur l'autre de manière à varier la distance entre l'assiette de dosage (5) et le plateau de distribution - (3).

Lorsque les orifices (10) dans le plateau de distribution (3) sont identiques et placés suivant un cercle concentrique à l'axe de l'organe (2) de distribution, le débit est alors identique pour chaque brûleur desservi par le distributeur concerné.

Cependant tout en maintenant constant le débit global des brûleurs desservis par un même distributeur, on peut avantager certains brûleurs par rapport à d'autres en modifiant leur position relative et/ou angulaire, ou en modifiant leurs dimensions ou formes.

Dans une réalisation particulière (fig. 4) on rapporte des pastilles (15) avec une ouverture excentrée dans les orifices (10) de plus grande dimension pratiquées dans le plateau de distribution.

Dans une autre réalisation particulière non dessinée, des règlettes, munies d'un orifice circulaire peuvent être positionées dans les rainures radiales, de manière à régler la distance recherchée par rapport à l'axe central.

Le distributeur de matière granulée ou pulvérulente suivant l'invention permet également d'obtenir des modes de débit très variés. Il suffit à cet effet de modifier la forme du déflecteur. Dans le cas du distributeur tel qu'il est représenté dans les figures 1 et 2, le déflecteur a la forme d'une spirale bien profilée et régulière. Le débit sera continue et uniforme.

Le déflecteur (16) tel qu'il est représenté à la figure (5) ne comprend que le segment initial d'une spirale. Le débit à chaque orifice sera discontinu avec une phase croissante et une phase décroissante, à raison d'une période d'alimentation par tour de l'organe de distribution (2).

A la figure 6 est représenté un déflecteur (17) comportant deux segments initiaux de spirale, donnant lieu à un débit discontinu comme le cas précédent mais à raison de deux périodes d'alimentation par tour de l'organe de distribution (2).

On peut également imaginer un plateau de distribution où à la limite, la distribution se fait sur une infinité de points de sortie, c.a.d. sans orifices mais par écoulement au delà du pourtour du plateau (3) sans pour autant sortir de l'objet de l'invention.

Le distributeur suivant l'invention s'applique pour toute matière granulée ou pulvérulente, que ce soit dans les matériaux de construction, les produits chimiques ou agricoles.

## Revendications

1. Distributeur de matière granulée ou pulvérlente comprenant une trémie d'alimentation (1), un plateau de distribution (3) et un organe de distribution (2), caractérisé en ce que l'organe de distribution - (2), se trouvant entre le trémie (1) et le plateau (3), est animé d'un mouvement de rotation et comprend une assiette de dosage (5) en dessous de la trémie (1) avec une sortie (8) et un déflecteur (9) de forme quelconque poussant le la matière granulée sur le plateau de distribution (3) vers les orifices (10) distribués dans de plateau (3).

2. Distributeur suivant la revendication (1) caractérisé en ce que la sortie (8) de l'assiette de dosage (5) est constituée par une tubulure excentrée par rapport à l'axe de rotation de l'organe de distribution (2).

3. Distributeur suivant la revendication (2) caractérisé en ce que la tubulure de sortie exentrée - (8) de l'assiette de dosage (5) est double, l'une - (8b) coulissant dans l'autre (8a) en modifiant la distance entre l'assiette de dosage (5) et le plateau de distribution (3).

4. Distributeur suivant une des revendications précédentes caractérisé en ce que le déflecteur (9) est constitué par un fer plat courbé suivant une spirale.

5. Distributeur suivant une des revendications précédentes caractérisé en ce que les divers orifices (10) du plateau de distribution (3) sont centrés sur un cercle concentrique à l'axe de notation de l'organe de distribution (2).

6. Distributeur suivant une des revendications précédentes caractérisé en ce que le plateau de distribution (3) est muni de pastilles (15) rapportées sur le plateau de distribution (3) avec des ouvertures excentrées par rapport aux orifices (10) de ce plateau (3).

7. Distributeur suivant une des revendications précédentes caractérisé en ce que le plateau de distribution (3) est muni de rainures radiales, des règlettes munies d'un orifice pouvant être positionées dans ces rainures de manière à déterminer, suivant le choix, la distance des orifice (10) par rapport à l'axe (6) de rotations de l'organe (2) de distribution.

8. Distributeur suivant une des revendications précédentes caractérisé en ce que chacun des orifices (10) est raccordé par une tubulure (11) à un tube venturi (12) raccordé à une centrale de soufflage d'air qui aspirant le combustible, le transporte en sortant du venturi dans un mélange air/matière granulée ou pulvérulente.

9. Distributeur suivant une des revendications précédentes caractérisé en ce que l'axe (6) de l'organe de distribution (2) est commandé par un groupe motoréducteur variateur (7).

10. Distributeur suivant une des revendications précédentes caractérisé en ce qu'un distribiteur d'air (13) est fixé en dessous du plateau de distribution (3), est muni d'une tubulure d'entrée (14) reliée à la soufflerie centrale, et d'autant de tubulures de sorties qu'il y a d'orifices (10) au plateau de distribution (3).

11. Distributeur suivant une des revendications précédentes caractérisé en ce que la trémie (1) est munie d'une tige élastique (16) dont une extrémité est fixée au centre de la partie supérieure de la trémie (1), tandis que l'autre vient se loger à l'intérieur de la tubulure de sortie (8) de l'assiette de dosage (5) de l'organe de distribution (2).

12. Installation de transport de matière granulée ou pulvérulente comprenant au moins un distributeur suivant une des revendications précédentes.

FIG.1

FIG.2

FIG. 3

FIG.4

0 201 474

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 815 486 (THERMO MURG) <br> * Figures 6,9; page 14, lignes 7-24 * | 1-5,8 | B 65 G 65/48 <br> F 23 K 3/00 <br> B 65 B 37/08 <br> C 21 B 5/00 |
| A | | 9,10, 12 | |
| | --- | | |
| Y | DE-C- 899 477 (STEINMÜLLER) <br> * Figures 1,2; page 2, lignes 3-35 * | 1-5,8 | |
| | --- | | |
| Y | FR-A-2 509 018 (NAUCHNO-PROIZVODSTVENNOE OBIEDINENIE PO PROEKTIROVANIU I ISSLEDOVANIU ENERGETICHESKOGO OBORUDOVANIA IMENI I.I.POLZUNOVA) <br> * Figure 1 * | 5,8 | |
| | | | DOMAINES TECHNIQUES RECHERCHES (Int. Cl.4) |
| | --- | | |
| A | TECHNICAL DIGEST, vol. 8, janvier 1966, pages 71,72; B. HODAN: "Device for ensuring a continuous flow of semi-loose and difficult-to-discharge materials from hoppers" <br> * Figure; colonne 2 * | 11 | F 23 K <br> B 65 G <br> B 65 D <br> B 65 B <br> C 21 B |
| | --- | | |
| A | FR-A-2 128 058 (AGRICOLES FRANCAISES) <br> * Figure * | 1,5,9 | |
| | ----- | | |

Le présent rapport de recherche a été établi pour toutes les revendications

| Lieu de la recherche <br> LA HAYE | Date d'achèvement de la recherche <br> 22-07-1986 | Examinateur <br> PESCHEL G. |
|---|---|---|